# EUROPÄISCHE PATENTSCHRIFT

(11) **EP 3 371 643 B1**
(45) Veröffentlichungstag und Bekanntmachung des Hinweises auf die Patenterteilung: **01.05.2019**
(21) Anmeldenummer: 16779060.9
(22) Anmeldetag: 06.10.2016
(51) Int. Cl.: G02C 7/08, G02B 27/00, G02B 27/01

(54) **BRILLE MIT EINEM BRILLENGLAS MIT EINEM BEWEGLICHEN LINSENSEGMENT**
SPECTACLES COMPRISING A SPECTACLES LENS WITH A MOVEABLE LENS SEGMENT
LUNETTES COMPORTANT UN VERRE DE LUNETTES MUNI D'UN SEGMENT DE LENTILLE MOBILE

(30) Priorität: 08.10.2015 DE 102015219482
(43) Veröffentlichungstag der Anmeldung: 12.09.2018
(60) Teilanmeldung: 18177790.5
(73) Patentinhaber: Carl Zeiss Vision International GmbH, 73430 Aalen (DE)
(72) Erfinder: GROMOTKA, Jeremias, 73433 Aalen (DE); KRATZER, Timo, 73434 Aalen (DE); KELCH, Gerhard, 73434 Aalen (DE)
(74) Vertreter: Carl Zeiss AG - Patentabteilung
(86) Internationale Anmeldenummer: PCT/EP2016/073920
(87) Internationale Veröffentlichungsnummer: WO 2017/060379

(56) Entgegenhaltungen:
- EP-A1- 2 590 002
- WO-A1-2014/124707
- GB-A- 2 498 171
- US-A1- 2012 057 124
- US-A1- 2012 194 781

## Beschreibung

Die Erfindung betrifft eine Brille mit einem Brillenglas mit einer Trägerlinse und einem Linsensegment nach dem Oberbegriff des Patentanspruchs 1.

Brillengläser sind aus dem Stand der Technik in vielen Variationen bekannt. Es gibt Brillengläser ohne nominelle dioptrische Wirkung und Korrektions-Brillengläser, also Brillengläser mit dioptrischer Wirkung. Dioptrische Wirkung ist der Sammelbegriff für die fokussierende und die prismatische Wirkung eines Brillenglases.

Bei Korrektions-Brillengläsern unterscheidet man zwischen Einstärken-Brillengläsern und Multifokal-Brillengläsern. Ein Einstärken-Brillenglas ist ein Brillenglas, bei dem von der Konstruktion her nur eine dioptrische Wirkung vorhanden ist. Ein Mehrstärken-Brillenglas ist ein Brillenglas, bei dem von der Konstruktion her zwei oder mehr sichtbar verschiedene Teile mit unterschiedlichen fokussierenden Wirkungen vorhanden sind. Von Bedeutung sind insbesondere Zweistärken- oder Bifokal-Brillengläser, nämlich Mehrstärken-Brillengläser mit zwei Teilen, üblicherweise für das Sehen in die Ferne und die Nähe, sowie Gleitsicht-Brillengläser, nämlich Brillengläser mit mindestens einer Gleitsichtfläche und einer zunehmenden (positiven) Wirkung, wenn der Brillenträger nach unten blickt. Selten sind degressive Brillengläser, also solche mit mindestens einer Gleitsichtfläche und einer abnehmenden Wirkung (d. h. einer Abschwächung der Wirkung), wenn der Brillenträger nach oben blickt.

Die GB 2498171 A, die US 8,496,-329 B2 und die WO 2014/124707 A1 beschreiben dem Grunde nach Einstärkenbrillen, welche Brillengläser besitzen, die aus zwei Linsensegmenten bestehen, die gegeneinander verschiebbar sind, um die Brechkraft frei einstellen zu können. Es sind verschiedene Mechaniken beschrieben, um die Linsensegmente gegeneinander zu verschieben.

Mehrstärken-Brillengläser gibt es in einstückiger Ausführung als auch in zusammengesetzter, mehrstückiger Ausführung. Unterschiedliche Varianten von Mehrstärken-Brillengläsern, bei denen u.a. bifokale oder progressive Segmente auf einem Grundglas appliziert sind, sind z.B. in der EP 0 341 998 A1 beschrieben.

Die US 2012/194781 A1 beschreibt eine Brille der gattungsgemäßen Art, welche durch einen Eye-Tracker angesteuert wird.

Aktuelle Brillengläser werden für einen Durchblickpunkt des Brillenträgers durch das Brillenglas optimiert. Bewegt der Brillenträger nur die Augen statt des gesamten Kopfes, stimmt der berechnete Durchblickpunkt nicht mehr mit der Realität überein. Da Menschen bei normalem Sehverhalten mit den Augen typischerweise bis zu 15° schweifen, bevor der Kopf nachgeführt wird, müssen etwa erstmalige Träger von Gleitsichtbrillen das Sehen mit der neuen Brille neu lernen.

Die Aufgabe der Erfindung besteht nunmehr darin, eine Brille mit Brillengläsern bereitzustellen, welche besser an den momentanen Durchblickpunkt des Brillenträgers durch das jeweilige Brillenglas angepasst werden kann.

Diese Aufgabe wird durch eine Brille mit den Merkmalen des Patentanspruchs 1 gelöst. Vorteilhafte Ausführungen und Weiterbildungen der Erfindung sind Gegenstand der Unteransprüche.

Die erfindungsgemäße Brille umfasst (zumindest) ein Brillenglas mit einer Trägerlinse und einem Linsensegment. Die Trägerlinse weist eine Vorderfläche, die nachfolgend als Trägerlinsenvorderfläche bezeichnet wird und eine Rückfläche, die nachfolgend als Trägerlinsenrückfläche bezeichnet wird, auf. Die Vorderfläche ist die objektseitige Fläche, also die Fläche des Brillenglases, die bestimmungsgemäß in der Brille vom Auge abgewandt liegt. Entsprechend ist die Rückfläche die augenseitige Fläche, nämlich die Fläche des Brillenglases, die bestimmungsgemäß in der Brille dem Auge zugewandt liegt. Das Linsensegment kann auf der Trägerlinsenvorderfläche oder auf der Trägerlinsenrückfläche angeordnet sein. Es ist auch möglich, dass auf der Trägerlinsenvorderfläche und auf der Trägerlinsenrückfläche jeweils (mindestens) ein Linsensegment angeordnet ist. Ist das Linsensegment auf der Trägerlinsenvorderfläche angeordnet, so wird es nachfolgend als Vorderflächenlinsensegment bezeichnet, ist es auf der Trägerlinsenrückfläche angeordnet, so wird es nachfolgend als Rückflächenlinsensegment bezeichnet.

Das Vorderflächenlinsensegment ist auf der Trägerlinsenvorderfläche verschieblich geführt. Alternativ oder zusätzlich kann auch das Rückflächenlinsensegment auf der Trägerlinsenrückfläche verschieblich geführt sein. Da entsprechend obigen Ausführungen bei normalem Sehverhalten die Augen typischerweise nicht mehr als 15° schweifen, bevor der Kopf nachgeführt wird, streben die Erfinder ein mechanisches Mitführen zumindest eines Teils der Brillenoptik an. Dies wird durch die vorstehend beschriebene erfindungsgemäße Ausgestaltung des Linsensegments oder der Linsensegmente möglich.

Um das entsprechende jeweilige Linsensegment, d.h. das Rückflächenlinsensegment und/oder das Vorderflächenlinsensegment am jeweils momentan gewünschten Ort der Trägerlinse platzieren zu können, sieht die Erfindung wahlweise einen Vorderflächenlinsensegmentantrieb vor, um das Vorderflächenlinsensegment auf der Trägerlinsenvorderfläche zu verschieben und/oder einen Rückflächenlinsensegmentantrieb, um das Rückflächenlinsensegment auf der Trägerlinsenrückfläche zu verschieben.

Eine erfindungsgemäße Brille umfasst ein oder zwei Brillengläser der voranstehend beschriebenen Art. Weiter umfasst die erfindungsgemäße Brille eine Augenpositionserfassungseinrichtung (sog. Eye Tracker) zur Erfassung der Position eines Auges eines die Brille tragenden Brillenträgers und eine Antriebssteuereinrichtung zum Ansteuern des Vorderflächenlinsensegmentantriebs und/oder des Rückflächenlinsensegmentantriebs in Abhängigkeit von der von der Augenpositionserfassungseinrichtung erfassten Position des Auges. Das entsprechende Linsensegment kann dabei so nachgeführt werden, dass es den Blickbewegungen des Auges folgt und der Durchblickpunkt des Auges durch das Brillenglas stets gleich bleibt. So ist es beispielsweise schon mit einem einzigen Freiheitsgrad der Verschiebebewegung möglich, bei Gleitsichtgläsern den Progressionskanal bei einem seitlichen Blick mitzuführen.

Die eingangs gestellte Aufgabe wird durch die erfindungsgemäße Ausführung vollumfänglich gelöst.

Die gleichbleibende Vorbestimmtheit der optischen Eigenschaften und die Zuverlässigkeit der mechanischen Eigenschaften des erfindungsgemäßen Brillenglases lassen sich gewährleisten, wenn das Vorderflächenlinsensegment eine Vorderflächenlinsensegmentrückfläche aufweist, die beim Verschieben formkomplementär auf der Trägerlinsenvorderfläche aufliegt und/oder wenn das Rückflächenlinsensegment eine Rückflächenlinsensegmentvorderfläche aufweist, die beim Verschieben formkomplementär auf der Trägerlinsenrückfläche aufliegt. Eine Dejustage der relativen Anordnung von Trägerlinse und Linsensegment(en) ist kaum möglich oder zumindest erschwert.

Verschiebebewegungen des jeweiligen Linsensegments längs einer Achse können beispielsweise durch (Vorder- bzw. Rückflächen-) Linsensegmentantriebe wirkende mechanische Scherenhebel oder Teleskopauszüge gewährleistet werden. Als Scherenhebel werden paarige Stäbe bezeichnet, die über Kreuz gelegt an diesem Kreuzungspunkt mit einer Achse verbunden sind. Eine gegeneinander gerichtete Bewegung zweier Hebelenden hat eine gleichartige Bewegung der jeweils gegenüberliegenden Hebelenden zur Folge. Diese Hebelbewegung kann zur Erzeugung einer Bewegung senkrecht zur auslösenden Bewegung genutzt werden. Im vorliegenden Fall ist an einem Hebelende das Linsensegment angeordnet, während sich am anderen Hebelende ein Krafterzeuger befindet. Ein Teleskopauszug ist eine Schienenführung mit mindestens zwei Führungsschienen, deren Profile ineinander laufen. Die Führungsschienen können als Wälz- oder Gleitführung ausgeführt werden. Im vorliegenden Fall ist an einem Ende das Linsensegment angeordnet, welches über einen Krafterzeuger angesteuert werden kann.

Alternativ sind zur Erzeugung der Verschiebebewegungen Antriebe mittels elektroaktiver Polymere, (Linear-) Motoren, Mikrofluidik-Systeme und dergleichen mehr möglich. Ein Linearmotor versetzt beispielsweise das von ihm angetriebene Linsensegment nicht in eine drehende Bewegung, sondern schiebt es auf geradliniger oder gekurvter Bahn (Translationsbewegung) über die (Anlage-) Fläche der Trägerlinse. Elektroaktive Polymere sind Polymere, die durch das Anlegen einer elektrischen Spannung ihre Form ändern. Anwendung finden diese Materialien ganz allgemein als Aktoren, was diese für den vorliegenden Anwendungsfall prädestiniert. Aufgrund der Ähnlichkeit ihrer Funktionsweise zu der natürlicher Muskeln, werden sie oft auch "künstliche Muskeln" genannt. Vorteile von elektroaktiven Polymeren im Vergleich zu anderen Aktuatormaterialien, wie z. B. piezoelektrische Keramiken, die im Rahmen der vorliegenden Erfindung natürlich ebenfalls als Antriebe für das Linsensegment oder die Linsensegmente eingesetzt werden können, sind die hohen Dehnungen, die erreicht werden können (bis 380 %). Von einer "aktiven Mikrofluidik" wird gesprochen, wenn die Manipulation der Arbeitsflüssigkeiten durch aktive (Mikro-) Komponenten wie durch Mikropumpen oder Mikroventile gezielt gesteuert werden. Mikropumpen fördern oder dosieren Flüssigkeiten, Mikroventile bestimmen die Richtung bzw. den Bewegungsmodus von gepumpten Medien.

Für den Fall der Verschiebbarkeit in nur einer Achsrichtung können z.B. zwei gegenüberliegende Seiten des beweglichen Linsensegments gezahnt (also als Zahnstange) ausgeführt sein. Das bewegliche Linsensegment kann dann mit (in der Brillenfassung leicht zu verbergenden) Zahnrädern angetrieben und verschoben werden. In einer Ausführung mit horizontaler Verschiebebewegung kann sich das Linsensegment z.B. über die gesamte Höhe der Trägerlinse erstrecken. In einer Ausführung mit vertikaler Verschiebebewegung kann sich das Linsensegment in entsprechender Weise z.B. über die gesamte Breite der Trägerlinse erstrecken.

Während die Trägerlinsenfläche, auf der kein Linsensegment angeordnet ist, in beliebiger Weise gestaltet sein kann, ist die Form der Trägerlinsenfläche, auf der das Linsensegment verschieblich geführt ist, an die Form der auf dieser angeordneten Linsensegmentfläche anzupassen, um sowohl optischen als auch mechanischen Anforderungen aufgrund der Verschiebung gerecht zu werden. Insbesondere wenn die Formkomplementarität der aneinander grenzenden Flächen beim Verschieben erhalten bleiben soll, ist die Form der aneinander grenzenden Flächen nicht mehr beliebig.

Eine Formkomplementarität lässt sich z.B. für torische aneinander grenzende Flächen von Trägerlinse und Linsensegment erreichen, wenn man nur Linearbewegungen in äquatorialer Richtung der Torusfläche der Trägerlinse zulässt. Eine Richtungsunabhängigkeit bei der Verschiebung ist möglich, wenn die Trägerlinsenvorderfläche, auf der das Vorderflächenlinsensegment verschieblich geführt ist, sphärisch ausgebildet ist, und/oder wenn die Trägerlinsenrückfläche, auf der das Rückflächenlinsensegment verschieblich geführt ist, sphärisch ausgebildet ist. In entsprechender Weise ist es vorteilhaft, wenn die in Kontakt mit der Trägerlinsenvorderfläche befindliche Vorderflächenlinsensegmentrückfläche formkomplementär sphärisch und/oder wenn die in Kontakt mit der Trägerlinsenrückfläche befindliche Rückflächenlinsensegmentvorderfläche formkomplementär sphärisch ausgebildet ist.

Abbildungsfehler des Auges höherer Ordnung lassen sich bei einem Brillenglas nur für eine bestimmte Blickrichtung korrigieren. Bei einer Brille mit Brillengläsern der vorstehend beschriebenen Art, ist es möglich, die Augenabbildungsfehler höherer Ordnung für unterschiedliche Blickrichtungen zu korrigieren, indem das dem blickenden Auge nachgeführte Linsensegment beim Nachführen gegenüber der Blickrichtung nicht verkippt wird. Dies bedeutet, dass die Nachführung auf einer Kugelfläche erfolgen muss, deren Ursprung im Augendrehpunkt liegt. Da das Brillenglas im Allgemeinen in einem Abstand von 25 mm bis 30 mm vom Augendrehpunkt angeordnet ist, ist es günstig, wenn die sphärische Trägerlinsenvorderfläche, auf der das Vorderflächenlinsensegment verschieblich mitgeführt wird, einen Radius r aufweist, welcher in einem Bereich zwischen 26 mm und 36 mm ist. Im Falle eines verschieblich mitgeführten Rückflächenlinsensegments weist die sphärische Trägerlinsenrückfläche einen Radius r auf, welcher in einem Bereich zwischen 25 mm und 35 mm ist.

Zur Erzielung einer hohen Beweglichkeit zwischen Trägerlinse und Linsensegment sieht die Erfindung in einer besonders vorteilhaften Ausführungsvariante vor, dass die Trägerlinsenvorderfläche, auf der das Vorderflächenlinsensegment verschieblich geführt ist, eine haftungsverringernde Beschichtung trägt und /oder dass die Trägerlinsenrückfläche, auf der das Rückflächenlinsensegment verschieblich geführt ist, eine haftungsverringernde Beschichtung trägt und/oder dass das Vorderflächenlinsensegment, das auf der Trägerlinsenvorderfläche verschieblich geführt ist, eine haftungsverringernde Beschichtung trägt und/oder dass das Rückflächenlinsensegment, das auf der Trägerlinsenrückfläche verschieblich geführt ist, eine haftungsverringernde Beschichtung trägt. Neben dem Effekt der Verbesserung der Gleiteigenschaft des jeweiligen Linsensegments auf der Trägerlinse ist die Notwendigkeit der weitest gehenden Verhinderung von Abrieb gewährleistet.

In einer weiteren Ausbaustufe kann das Vorderflächenlinsensegment eine Anzeigeeinrichtung (z.B. ein Display mit Einkoppeloptik) zum Anzeigen von Information aufweisen. Alternativ oder zusätzlich kann das Rückflächenlinsensegment eine Anzeigeeinrichtung zum Anzeigen von Information aufweisen. Aufgrund der Verschiebbarkeit des entsprechenden Linsensegments kann die Information -je nach Ausführung- an dem Ort bereitgestellt werden, an dem sie gebraucht wird, ohne dass eine Blickrichtungsänderung des Brillenträgers erforderlich wird. Des Weiteren kann die Technologie auch genutzt werden um Schwächen derzeitiger wirkungskorrigierender Datenbrillen zu begegnen. Durch Aufbringen der dioptrischen (Einstärken- oder Gleitsicht-) Wirkung auf der Fläche der Trägerlinse, auf der kein Linsensegment verschieblich geführt ist, mit entsprechender sphärischer Auflagefläche für das Linsensegment, kann das als Datenbrillenelement wirkende Linsensegment dynamisch oder statisch nach individuellen Anforderungen platziert werden.

In einer Ausführungsvariante der Erfindung ist vorgesehen, dass das Vorderflächenlinsensegment eine Vorderflächenlinsensegmentvorderfläche mit einer ortsabhängigen Flächenbrechkraft aufweist und/oder dass das Rückflächenlinsensegment eine Rückflächenlinsensegmentrückfläche mit einer ortsabhängigen Flächenbrechkraft aufweist. Damit lässt sich die Brechkraft des Brillenglases auf die Objektentfernung für die jeweilige Blickrichtung einstellen.

In einer weiteren Ausbaustufe kann die erfindungsgemäße Brille zusätzlich zu der Augenpositionserfassungseinrichtung und der Antriebssteuereinrichtung mit einer Entfernungserfassungseinrichtung zum Erfassen der Entfernung eines von dem Auge betrachteten Objekts ausgestattet sein. Die Antriebssteuereinrichtung ist dabei zum Ansteuern des Vorderflächenlinsensegmentantriebs und/oder des Rückflächenlinsensegmentantriebs in Abhängigkeit von der von der Augenpositionserfassungseinrichtung erfassten Position des Auges und der von der Entfernungserfassungseinrichtung erfassten Entfernung des betrachteten Objekts ausgebildet.

Aus der kombinierten Information von Augenpositionserfassungseinrichtung (Eye Tracker) und Entfernungserfassungseinrichtung kann dem Brillenträger eine für die aktuelle Entfernung ideale Korrektur präsentiert werden. So kann, ausgehend von aktuellen Gleitsichtglasdesigns, je nach ermittelter Betrachtungsentfernung der Nahteil, Fernteil oder der passende Abschnitt des Progressionskanals vor der Pupille präsentiert werden, wenn das verschobene Linsensegment eine Wirkungsverteilung aufweist, die den entsprechenden Zonen eines herkömmlichen Gleitsichtglases entspricht.

Alternativ (oder zusätzlich) zu einer Ausbildung des mitgeführten Linsensegments mit einer ortsabhängigen Flächenbrechkraft sieht die Erfindung vor, dass das Vorderflächenlinsensegment eine (insbesondere z.B. auch örtlich) veränderbare Brechkraft aufweist und/oder dass das Rückflächenlinsensegment eine (insbesondere z.B. auch örtlich) veränderbare Brechkraft aufweist. Auch dadurch ist es möglich, die Brechkraft des jeweiligen Brillenglases an die jeweilige Objektentfernung und/oder die erforderliche Wirkung zur Korrektur von Augenaberrationen höherer Ordnung anzupassen.

Beispielsweise kann das Vorderflächenlinsensegment eine Vorderflächenlinsensegmentvorderfläche mit einer (insbesondere z.B. auch örtlich) veränderbaren Flächenbrechkraft aufweisen und/oder das Rückflächenlinsensegment kann eine Rückflächenlinsensegmentrückfläche mit einer (insbesondere z.B. auch örtlich) veränderbaren Flächenbrechkraft aufweisen. Ein Beispiel für eine Linse mit veränderbarer Brechkraft, bei welcher die Flächenbrechkraft veränderbar ist, und welches als Linsensegment entsprechend der vorliegenden Erfindung eingesetzt werden kann, ist aus der DE 100 47 323 B4 bekannt.

Eine Brille mit einem Automatismus zur Brechkrafteinstellung umfasst eine Veränderungseinrichtung, die eingerichtet ist,
(a) die veränderbare Brechkraft des Vorderflächenlinsensegments und/oder des Rückflächenlinsensegments und/oder
(b) die veränderbare Flächenbrechkraft der Vorderflächenlinsensegmentvorderfläche des Vorderflächenlinsensegments und/oder die veränderbare Flächenbrechkraft der Rückflächenlinsensegmentrückfläche des Rückflächenlinsensegments
in Abhängigkeit von der von der Augenpositionserfassungseinrichtung erfassten Position des Auges zu verändern.

Zusätzlich kann die Brille mit einer Entfernungserfassungseinrichtung zum Erfassen der Entfernung eines von dem Auge des die Brille tragenden Brillenträgers betrachteten Objekts ausgerüstet sein. Die Veränderungseinrichtung ist nunmehr nach dieser Variante der Erfindung eingerichtet,
(a) die veränderbare Brechkraft des Vorderflächenlinsensegments und/oder des Rückflächenlinsensegments und/oder
(b) die veränderbare Flächenbrechkraft der Vorderflächenlinsensegmentvorderfläche des Vorderflächenlinsensegments und/oder die veränderbare Flächenbrechkraft der Rückflächenlinsensegmentrückfläche des Rückflächenlinsensegments
in Abhängigkeit von der von der Augenpositionserfassungseinrichtung erfassten Position des Auges und der von der Entfernungserfassungseinrichtung erfassten Entfernung des betrachteten Objekts zu verändern.

Mit dieser oben beschriebenen Technologie ist es möglich die Lage des Nahteils bei einem Bifokalglas oder die Lage des Zwischen- und Nahteiles bei einem Gleitsichtglas individuell festzulegen, wobei immer das gleiche Trägerglas (z.B. ein sphärisches Einstärkenglas) verwendet werden könnte. Auch Spezialanwendungen, wie z.B. eine Pilotenbrille mit degressiven Brillengläsern, sind dadurch leicht möglich.

Durch die automatische "Mitführung" des beweglichen Linsensegments oder der beweglichen Linsensegmente können zusätzlich zu den konventionell korrigierbaren Fehlern, wie Sphäre, Zylinder und zugehörige Achslage, Prisma und zugehörige Basis auch Fehler höherer Ordnung korrigiert werden.

Die Erfindung wird nachfolgend anhand der Zeichnung näher beschrieben. Identische oder funktionsgleiche Komponenten sind mit denselben Bezugszeichen versehen. Es zeigen:
- Figur 1: ein Prinzipbild eines Ausführungsbeispiels eines erfindungsgemäßen Brillenglases im Zentralquerschnitt,
- Figur 2: der rechte Teil eines Ausführungsbeispiels einer erfindungsgemäßen Brille in Draufsicht von der Augenseite,
- Figur 3: eine die erfindungsgemäße Brille nach der Figur tragende Person.

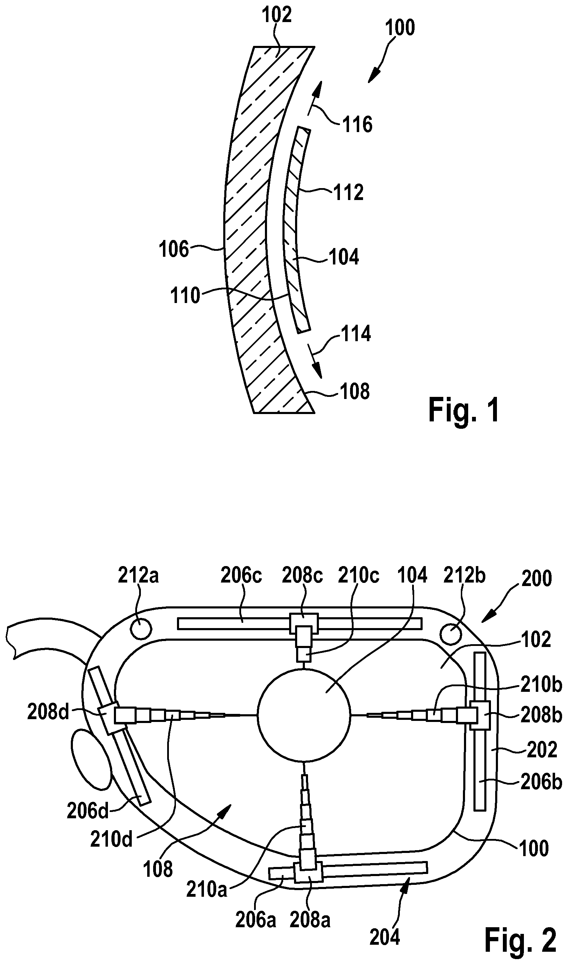

Die Figur 1 zeigt ein erfindungsgemäßes Brillenglas 100 als Prinzipdarstellung im Zentralquerschnitt. Das Brillenglas 100 umfasst eine Trägerlinse 102 und ein Linsensegment 104. Die Trägerlinse 102 ist ein sphärisches Einstärkenglas mit einer sphärischen Vorderfläche 106 und einer sphärischen Rückfläche 108. Im vorliegenden Ausführungsbeispiel ist auch das Linsensegment 104 ein sphärisches Glas mit einer sphärischen Vorderfläche 110 und einer sphärischen Rückfläche 112 mit einem Radius r von 28 mm.

Die Rückfläche 108 der Trägerlinse 102 ist formkomplementär zu der Vorderfläche 110 des Linsensegments 104 ausgebildet. Die Vorderfläche 110 des Linsensegments 104 ist auf der Rückfläche 108 der Trägerlinse 102 und auf dieser gleitend angeordnet. Zur Haftungsminderung sind die aufeinander gleitenden Flächen 108, 110 mit einer haftungsmindernden Beschichtung versehen. Als geeignet hat sich z.B. das unter dem Handelsnamen SURFCLEAR von der Firma Canon Optron Inc. vertriebene Produkt herausgestellt. Unter Verwendung der vorstehenden Begriffe handelt es sich bei der in der Figur gezeigten Ausführungsvariante um ein Brillenglas 100 mit einer Trägerlinse 102 und einem auf Trägerlinsenrückfläche 108 angeordneten Rückflächenlinsensegment 104, wobei das Rückflächenlinsensegment 104 auf der Trägerlinsenrückfläche 108 -wie in der Figur 1 mit Hilfe der Pfeile 114, 116 angedeutet istverschieblich geführt ist.

Erfindungsgemäß wird ein mechanisches Mitführen des Rückflächenlinsensegments 104 angestrebt. Zu diesem Zweck ist das Rückflächenlinsensegment 104 in einer oder zwei Achsen beweglich gelagert (in Figur 1 nicht gezeigt). Dieses individuell einzuschleifende Rückflächenlinsensegment 104 trägt im vorliegenden Ausführungsbeispiel neben der eventuell noch benötigten sphärischen Feinkorrektur alle weiteren Rezept- (Rx) Parameter (nämlich Zylinder, Achse etc.). Die Rückfläche 112 des Rückflächenlinsensegments 104 kann in sphärischer, astigmatischer oder progressiver Form vorliegen. Das Rückflächenlinsensegment 104 kann unter Berücksichtigung der dioptrischen Wirkung der Trägerlinse 102 zur Korrektur der Fehler höherer Ordnung ausgebildet sein.

Die Lage des beweglichen Rückflächenlinsensegments 104 wird z.B. anhand der Vorgaben eines Optikers, Augenarztes oder Eye Care Professionals (ECP) aufgrund der individuellen Anforderung des Brillenträgers berechnet und während des Produktionsschrittes vom Hersteller fest auf der Trägerlinse 102 verschieblich geführt verankert (geklebt, laminiert etc.). Damit kann z.B. ein Nahteil mit Zusatzwirkung (z.B. Addition) an einer beliebigen Stelle (horizontal für Inset und vertikal entsprechend der benötigten Blicksenkung oder wie in einer Pilotenbrille, also oben im Glas) in der Trägerlinse 102 angebracht werden. Unter Inset eines Gleitsicht-Brillenglases versteht man die horizontale Entfernung zwischen dem Anpasspunkt und der Mitte des vorbestimmten Nahteiles.

Anstelle der Berechnung und Verankerung durch den Hersteller kann die Lage des beweglichen Linsensegments 104 anhand der Vorgaben vom Optiker, Augenarzt oder ECP auch aufgrund der individuellen Kundenanforderung vom Hersteller berechnet und vom Optiker, Augenarzt oder ECP selbst während der Brillenabgabe auf der Trägerlinse 102 des Brillenglases 100 verankert werden.

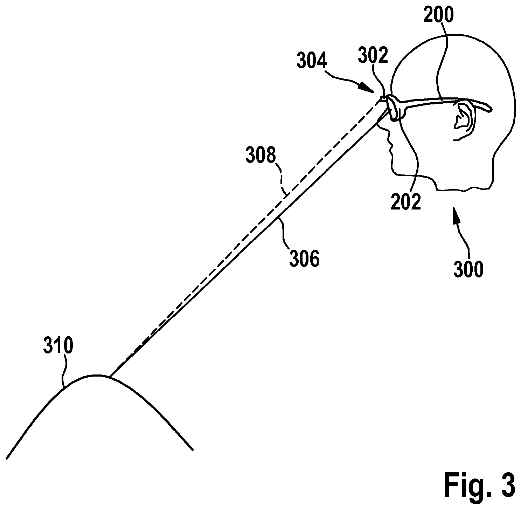

Die Figuren 2 und 3 zeigen ein Ausführungsbeispiel einer erfindungsgemäßen Brille 200. Die Brille 200 umfasst eine Brillenfassung 202, in welche ein Brillenglas 100 der vorstehend beschriebenen Art eingesetzt ist. Der Figur 2 entnimmt man die Trägerlinse 102 und das Rückflächenlinsensegment 104. Die Brille 200 verfügt über einen Rückflächenlinsensegmentantrieb, um das Rückflächenlinsensegment 104 auf der Trägerlinsenrückfläche 108 zu verschieben. Der Rückflächenlinsensegmentantrieb umfasst ein auf der Rückseite 204 der Brillenfassung 202 befestigtes aus vier Schiebestangen 206a, 206b, 206c, 206d bestehendes Gestänge, vier Linearmotoren 208a, 208b, 208c, 208d, von denen jeweils einer auf einer der vier Schiebestangen 206a, 206b, 206c, 206d verschieblich geführt ist sowie vier Teleskopantrieben 210a, 210b, 210c, 210d, welche jeweils einendseitig mit dem Rückflächenlinsensegment 104 und jeweils andernendseitig mit einem der Linearmotoren 208a, 208b, 208c, 208d verbunden sind. Mit Hilfe der Linearmotoren 208a, 208b, 208c, 208d und der Teleskopantriebe 210a, 210b, 210c, 210d lässt sich das Rückflächenlinsensegment 104 über der Rückfläche 108 der Trägerlinse 102 in nahezu beliebiger Weise verschieben und positionieren.

In der Brillenfassung 202 ist ein Eye Tracker integriert. Die Figur 2 zeigt zwei Kameras 212a, 212b des Eye Trackers, welche Bilder des Auges des Brillenträgers aufnehmen, aus denen die momentane Position der Pupillenmitte des Auges und die momentane Blickrichtung 306 des Brillenträgers 300 bestimmt wird.

In der Brillenfassung 202 befindet sich des Weiteren eine Antriebssteuereinrichtung (kann nicht gezeigt werden, da sie in der Brillenfassung verborgen ist), die den Rückflächenlinsensegmentantrieb 208a, 208b, 208c, 208d, 210a, 210b, 210c, 210d ansteuert, so dass das bewegliche Linsensegment 112 den Blickbewegungen des Auges so nachgeführt wird, dass der Durchblickpunkt des Auges des Brillenträgers 300 durch das Brillenglas 100 stets gleich bleibt.

So wäre es schon mit nur einem Freiheitsgrad beispielsweise möglich, bei Gleitsichtgläsern den Progressionskanal bei einem seitlichen Blick mitzuführen.

In der vorliegenden Ausbaustufe ist die erfindungsgemäße Brille zusätzlich mit einer Entfernungserfassungseinrichtung 302 ausgestattet, die sich auf der Vorderseite 304 der Brillenfassung 202 befindet. Diese Entfernungserfassungseinrichtung 304 kann die Entfernung 308 eines von dem Auge des Brillenträgers 300 betrachteten Objekts 310 erfassen. Aus der kombinierten Information von Eye Tracker 212a, 212b und Entfernungserfassungseinrichtung 304 kann dem Brillenträger 300 durch geeignete Ansteuerung und Verschiebung des Linsensegments 104 eine für die aktuelle Entfernung ideale Korrektur präsentiert werden. So kann z.B. ausgehend von aktuellen Gleitsichtglasdesigns, je nach ermittelter Betrachtungsentfernung der Nahteil, der Fernteil oder der passende Abschnitt des Progressionskanals vor der Pupille des Brillenträgers 300 präsentiert werden.

## Patentansprüche

1. Brille (200) mit
(i) einem Brillenglas (100) mit
- einer eine Trägerlinsenvorderfläche (106) und eine Trägerlinsenrückfläche (108) aufweisenden Trägerlinse (102) und
- einem auf der Trägerlinsenvorderfläche (106) angeordneten Vorderflächenlinsensegment und/oder mit einem auf der Trägerlinsenrückfläche (108) angeordneten Rückflächenlinsensegment (104), wobei
- das Vorderflächenlinsensegment auf der Trägerlinsenvorderfläche (106) verschieblich geführt ist und/oder dass das Rückflächenlinsensegment (104) auf der Trägerlinsenrückfläche (108) verschieblich geführt ist,
(ii) einem Vorderflächenlinsensegmentantrieb, um das Vorderflächenlinsensegment auf der Trägerlinsenvorderfläche (106) zu verschieben und/oder einen Rückflächenlinsensegmentantrieb (208a, 208b, 208c, 208d, 210a, 210b, 210c, 210d), um das Rückflächenlinsensegment (104) auf der Trägerlinsenrückfläche (108) zu verschieben,
(iii) einer Augenpositionserfassungseinrichtung (212a, 212b) zur Erfassung der Position eines Auges eines die Brille (200) tragenden Brillenträgers (300) und
(iv) einer Antriebssteuereinrichtung zum Ansteuern des Vorderflächenlinsensegmentantriebs und/oder des Rückflächenlinsensegmentantriebs (208a, 208b, 208c, 208d, 210a, 210b, 210c, 210d) in Abhängigkeit von der von der Augenpositionserfassungseinrichtung (212a, 212b) erfassten Position des Auges
**dadurch gekennzeichnet, dass**
die Antriebssteuereinrichtung eingerichtet ist, den Vorderflächenlinsensegmentantrieb und/oder den Rückflächenlinsensegmentantrieb (208a, 208b, 208c, 208d, 210a, 210b, 210c, 210d) so anzusteuern, dass das Vorderflächenlinsensegment und/oder das Rückflächenlinsensegment (104) Blickbewegungen des Auges nachgeführt wird.

2. Brille (200) nach Anspruch 1,
**dadurch gekennzeichnet, dass**
die Antriebssteuereinrichtung eingerichtet ist, den Vorderflächenlinsensegmentantrieb und/oder den Rückflächenlinsensegmentantrieb (208a, 208b, 208c, 208d, 210a, 210b, 210c, 210d) so anzusteuern, dass das Vorderflächenlinsensegment und/oder das Rückflächenlinsensegment (104) Blickbewegungen des Auges des Brillenträgers (300) derart nachgeführt wird, dass ein Durchblickpunkt des Auges des Brillenträgers (300) durch das Brillenglas (100) stets gleich bleibt.

3. Brille (200) nach Anspruch 1 oder 2,
**dadurch gekennzeichnet, dass**
das Vorderflächenlinsensegment und/oder das Rückflächenlinsensegment (104) eine Wirkungsverteilung aufweist, die einem Nahteil, einem Fernteil und einem Progressionskanal eines herkömmlichen Gleitsichtglases entspricht.

4. Brille (200) nach Anspruch 3,
**dadurch gekennzeichnet, dass**
die Antriebssteuereinrichtung eingerichtet ist, den Vorderflächenlinsensegmentantrieb und/oder den Rückflächenlinsensegmentantrieb (208a, 208b, 208c, 208d, 210a, 210b, 210c, 210d) so anzusteuern, dass das Vorderflächenlinsensegment und/oder das Rückflächenlinsensegment (104) so verschoben wird, dass entsprechend der erfassten Entfernung (308) der Nahteil, der Fernteil oder der passende Abschnitt des Progressionskanals vor einer Pupille des Auges präsentiert werden.

5. Brille (200) nach einem der Ansprüche 1 bis 4,
**dadurch gekennzeichnet, dass**
die Antriebssteuereinrichtung eingerichtet ist, den Vorderflächenlinsensegmentantrieb und/oder den Rückflächenlinsensegmentantrieb (208a, 208b, 208c, 208d, 210a, 210b, 210c, 210d) so anzusteuern, dass das Vorderflächenlinsensegment und/oder das Rückflächenlinsensegment (104) beim Nachführen gegenüber einer Blickrichtung des Auges nicht verkippt wird.

6. Brille (200) nach Anspruch 5,
**dadurch gekennzeichnet, dass**
die Trägerlinsenvorderfläche (106), auf der das Vorderflächenlinsensegment verschieblich geführt ist, sphärisch ausgebildet ist und/oder dass die Trägerlinsenrückfläche (108), auf der das Rückflächenlinsensegment (104) verschieblich geführt ist, sphärisch ausgebildet ist und dass die sphärische Trägerlinsenvorderfläche (106) einen Radius (r) aufweist, welcher in einem Bereich zwischen 26 mm und 36 mm ist und/oder dass die sphärische Trägerlinsenrückfläche (108) einen Radius (r) aufweist, welcher in einem Bereich zwischen 25 mm und 35 mm ist.

7. Brille (200) nach Anspruch 5,
**dadurch gekennzeichnet, dass**
- die Trägerlinsenvorderfläche (106), auf der das Vorderflächenlinsensegment verschieblich geführt ist, sphärisch ausgebildet ist und/oder dass die Trägerlinsenrückfläche (108), auf der das Rückflächenlinsensegment (104) verschieblich geführt ist, sphärisch ausgebildet ist und dass die sphärische Trägerlinsenvorderfläche (106) einen Radius (r) aufweist, welcher in einem Bereich zwischen 26 mm und 36 mm ist und/oder dass die sphärische Trägerlinsenrückfläche (108) einen Radius (r) aufweist, welcher in einem Bereich zwischen 25 mm und 35 mm ist, wobei die Antriebssteuereinrichtung eingerichtet ist, den Vorderflächenlinsensegmentantrieb und/oder den Rückflächenlinsensegmentantrieb (208a, 208b, 208c, 208d, 210a, 210b, 210c, 210d) so anzusteuern, dass das Vorderflächenlinsensegment und/oder das Rückflächenlinsensegment (104) beim Nachführen gegenüber einer Blickrichtung des Auges nicht verkippt wird.

8. Brille (200) nach einem der vorangegangenen Ansprüche, **dadurch gekennzeichnet, dass** das Vorderflächenlinsensegment eine Vorderflächenlinsensegmentrückfläche aufweist, die beim Verschieben formkomplementär auf der Trägerlinsenvorderfläche (106) aufliegt und/oder dass das Rückflächenlinsensegment (104) eine Rückflächenlinsensegmentvorderfläche (110) aufweist, die beim Verschieben formkomplementär auf der Trägerlinsenrückfläche (108) aufliegt.

9. Brille (200) nach einem der vorangegangenen Ansprüche, **dadurch gekennzeichnet, dass** die Trägerlinsenvorderfläche (106), auf der das Vorderflächenlinsensegment verschieblich geführt ist, eine haftungsverringernde Beschichtung trägt und /oder dass die Trägerlinsenrückfläche (108), auf der das Rückflächenlinsensegment (104) verschieblich geführt ist, eine haftungsverringernde Beschichtung trägt und/oder dass das Vorderflächenlinsensegment, das auf der Trägerlinsenvorderfläche (106) verschieblich geführt ist, eine haftungsverringernde Beschichtung trägt und/oder dass das Rückflächenlinsensegment (104), das auf der Trägerlinsenrückfläche (108) verschieblich geführt ist, eine haftungsverringernde Beschichtung trägt.

10. Brille (200) nach einem der vorangegangenen Ansprüche, **dadurch gekennzeichnet, dass** das Vorderflächenlinsensegment eine Anzeigeeinrichtung zum Anzeigen von Information aufweist und/oder dass das Rückflächenlinsensegment eine Anzeigeeinrichtung zum Anzeigen von Information aufweist.

11. Brille (200) nach einem der vorangegangenen Ansprüche **gekennzeichnet durch**
- eine Entfernungserfassungseinrichtung (304) zum Erfassen der Entfernung (308) eines von dem Auge des die Brille tragenden Brillenträgers (300) betrachteten Objekts (310), wobei
- die Antriebssteuereinrichtung zum Ansteuern des Vorderflächenlinsensegmentantriebs und/oder des Rückflächenlinsensegmentantriebs (208a, 208b, 208c, 208d, 210a, 210b, 210c, 210d) in Abhängigkeit von der von der Augenpositionserfassungseinrichtung (212a, 212b) erfassten Position des Auges und der von der Entfernungserfassungseinrichtung (304) erfassten Entfernung (308) des betrachteten Objekts (310) ausgebildet ist.

12. Brille (200) nach einem der vorangegangenen Ansprüche, **dadurch gekennzeichnet, dass** das Vorderflächenlinsensegment eine veränderbare Brechkraft aufweist und/oder dass das Rückflächenlinsensegment (104) eine veränderbare Brechkraft aufweist.

13. Brille (200) nach einem der vorangegangenen Ansprüche, **dadurch gekennzeichnet, dass** das Vorderflächenlinsensegment eine Vorderflächenlinsensegmentvorderfläche mit einer veränderbaren Flächenbrechkraft aufweist und/oder dass das Rückflächenlinsensegment (104) eine Rückflächenlinsensegmentrückfläche (112) mit einer veränderbaren Flächenbrechkraft aufweist.

14. Brille (200) nach einem der Ansprüche 12 oder 13, **dadurch gekennzeichnet, dass** eine Veränderungseinrichtung vorgesehen ist, um
(a) die veränderbare Brechkraft des Vorderflächenlinsensegments und/oder des Rückflächenlinsensegments (104) und/oder
(b) die veränderbare Flächenbrechkraft der Vorderflächenlinsensegmentvorderfläche des Vorderflächenlinsensegments und/oder die veränderbare Flächenbrechkraft der Rückflächenlinsensegmentrückfläche des Rückflächenlinsensegments
in Abhängigkeit von der von der Augenpositionserfassungseinrichtung (212a, 212b) erfassten Position des Auges zu verändern.

15. Brille (200) nach Anspruch 14, **gekennzeichnet durch**
- eine Entfernungserfassungseinrichtung (304) zum Erfassen der Entfernung (308) eines von dem Auge des die Brille tragenden Brillenträgers (300) betrachteten Objekts (310), wobei die Veränderungseinrichtung eingerichtet ist,
(a) die veränderbare Brechkraft des Vorderflächenlinsensegments und/oder des Rückflächenlinsensegments (104) und/oder
(b) die veränderbare Flächenbrechkraft der Vorderflächenlinsensegmentvorderfläche des Vorderflächenlinsensegments und/oder die veränderbare Flächenbrechkraft der Rückflächenlinsensegmentrückfläche des Rückflächenlinsensegments
in Abhängigkeit von der von der Augenpositionserfassungseinrichtung (212a, 212b) erfassten Position des Auges und der von der Entfernungserfassungseinrichtung (304) erfassten Entfernung (308) des betrachteten Objekts (310) zu verändern.

16. Verfahren zum Herstellen einer Brille (200) mit einem Brillenglas (100), wobei
(i) das Brillenglas (100)
- eine eine Trägerlinsenvorderfläche (106) und eine Trägerlinsenrückfläche (108) aufweisenden Trägerlinse (102) und
- ein auf der Trägerlinsenvorderfläche (106) angeordnetes Vorderflächenlinsensegment und/oder ein auf der Trägerlinsenrückfläche (108) angeordnetes Rückflächenlinsensegment (104) aufweist, wobei
- das Vorderflächenlinsensegment auf der Trägerlinsenvorderfläche (106) verschieblich geführt ist und/oder dass das Rückflächenlinsensegment (104) auf der Trägerlinsenrückfläche (108) verschieblich geführt ist, wobei
die Brille (200) ferner
(ii) einen Vorderflächenlinsensegmentantrieb aufweist, um das Vorderflächenlinsensegment auf der Trägerlinsenvorderfläche (106) zu verschieben und/oder einen Rückflächenlinsensegmentantrieb (208a, 208b, 208c, 208d, 210a, 210b, 210c, 210d), um das Rückflächenlinsensegment (104) auf der Trägerlinsenrückfläche (108) zu verschieben,
(iii) eine Augenpositionserfassungseinrichtung (212a, 212b) zur Erfassung der Position eines Auges eines die Brille (200) tragenden Brillenträgers (300) und
(iv) eine Antriebssteuereinrichtung zum Ansteuern des Vorderflächenlinsensegmentantriebs und/oder des Rückflächenlinsensegmentantriebs (208a, 208b, 208c, 208d, 210a, 210b, 210c, 210d) in Abhängigkeit von der von der Augenpositionserfassungseinrichtung (212a, 212b) erfassten Position des Auges aufweist
**dadurch gekennzeichnet, dass**
die Antriebssteuereinrichtung eingerichtet wird, den Vorderflächenlinsensegmentantrieb und/oder den Rückflächenlinsensegmentantrieb (208a, 208b, 208c, 208d, 210a, 210b, 210c, 210d) so anzusteuern, dass das Vorderflächenlinsensegment und/oder das Rückflächenlinsensegment (104) Blickbewegungen des Auges nachgeführt wird und
die Antriebssteuereinrichtung eingerichtet wird, den Vorderflächenlinsensegmentantrieb und/oder den Rückflächenlinsensegmentantrieb (208a, 208b, 208c, 208d, 210a, 210b, 210c, 210d) so anzusteuern, dass das Vorderflächenlinsensegment und/oder das Rückflächenlinsensegment (104) beim Nachführen gegenüber einer Blickrichtung des Auges nicht verkippt wird.

17. Verfahren zum Betrieb eines Brillenglases (100) einer Brille (200) mit
(i) dem Brillenglas (100) mit
- einer eine Trägerlinsenvorderfläche (106) und eine Trägerlinsenrückfläche (108) aufweisenden Trägerlinse (102) und
- einem auf der Trägerlinsenvorderfläche (106) angeordneten Vorderflächenlinsensegment und/oder mit einem auf der Trägerlinsenrückfläche (108) angeordneten Rückflächenlinsensegment (104), wobei
- das Vorderflächenlinsensegment auf der Trägerlinsenvorderfläche (106) verschieblich geführt ist und/oder dass das Rückflächenlinsensegment (104) auf der Trägerlinsenrückfläche (108) verschieblich geführt ist,
(ii) einem Vorderflächenlinsensegmentantrieb, um das Vorderflächenlinsensegment auf der Trägerlinsenvorderfläche (106) zu verschieben und/oder einen Rückflächenlinsensegmentantrieb (208a, 208b, 208c, 208d, 210a, 210b, 210c, 210d), um das Rückflächenlinsensegment (104) auf der Trägerlinsenrückfläche (108) zu verschieben,
(iii) einer Augenpositionserfassungseinrichtung (212a, 212b) zur Erfassung der Position eines Auges eines die Brille (200) tragenden Brillenträgers (300) und
(iv) einer Antriebssteuereinrichtung zum Ansteuern des Vorderflächenlinsensegmentantriebs und/oder des Rückflächenlinsensegmentantriebs (208a, 208b, 208c, 208d, 210a, 210b, 210c, 210d) in Abhängigkeit von der von der Augenpositionserfassungseinrichtung (212a, 212b) erfassten Position des Auges
**dadurch gekennzeichnet, dass**
die Antriebssteuereinrichtung eingerichtet ist, den Vorderflächenlinsensegmentantrieb und/oder den Rückflächenlinsensegmentantrieb (208a, 208b, 208c, 208d, 210a, 210b, 210c, 210d) so anzusteuern, dass das Vorderflächenlinsensegment und/oder das Rückflächenlinsensegment (104) Blickbewegungen des Auges nachgeführt wird und
das Vorderflächenlinsensegment und/oder das Rückflächenlinsensegment (104) auf einer Kugelfläche nachgeführt wird, deren Ursprung im Augendrehpunkt liegt.

## Claims

1. Spectacles (200) comprising
(i) a spectacle lens (100) comprising
- a carrier lens (102) having a carrier lens front surface (106) and a carrier lens rear surface (108), and
- a front surface lens segment arranged on the carrier lens front surface (106), and/or comprising a rear surface lens segment (104) arranged on the carrier lens rear surface (108), wherein
- the front surface lens segment is guided displaceably on the carrier lens front surface (106), and/or wherein the rear surface lens segment (104) is guided displaceably on the carrier lens rear surface (108),
(ii) a front surface lens segment drive in order to displace the front surface lens segment on the carrier lens front surface (106) and/or a rear surface lens segment drive (208a, 208b, 208c, 208d, 210a, 210b, 210c, 210d) in order to displace the rear surface lens segment (104) on the carrier lens rear surface (108),
(iii) an eye position detection device (212a, 212b) for detecting the position of an eye of a spectacles wearer (300) wearing the spectacles (200), and
(iv) a drive control device for controlling the front surface lens segment drive and/or the rear surface lens segment drive (208a, 208b, 208c, 208d, 210a, 210b, 210c, 210d) depending on the position of the eye detected by the eye position detection device (212a, 212b),
**characterized in that**
the drive control device is designed to control the front surface lens segment drive and/or the rear surface lens segment drive (208a, 208b, 208c, 208d, 210a, 210b, 210c, 210d) such that the front surface lens segment and/or the rear surface lens segment (104) are/is tracked to viewing movements of the eye.

2. Spectacles (200) according to Claim 1,
**characterized in that**
the drive control device is designed to control the front surface lens segment drive and/or the rear surface lens segment drive (208a, 208b, 208c, 208d, 210a, 210b, 210c, 210d) such that the front surface lens segment and/or the rear surface lens segment (104) are/is tracked to viewing movements of the eye of the wearer (300) of the spectacles in such a way that a viewing point of the eye of the wearer (300) of the spectacles through the spectacle lens (100) always remains the same.

3. Spectacles (200) according to Claim 1 or 2,
**characterized in that**
the front surface lens segment and/or the rear surface lens segment (104) have/has a power distribution corresponding to a near part, a distance part and a progression channel of a conventional progressive lens.

4. Spectacles (200) according to Claim 3,
**characterized in that**
the drive control device is designed to control the front surface lens segment drive and/or the rear surface lens segment drive (208a, 208b, 208c, 208d, 210a, 210b, 210c, 210d) such that the front surface lens segment and/or the rear surface lens segment (104) are/is displaced such that, in accordance with the detected distance (308), the near part, the distance part or the appropriate section of the progression channel is presented in front of a pupil of the eye.

5. Spectacles (200) according to any of Claims 1 to 4,
**characterized in that**
the drive control device is designed to control the front surface lens segment drive and/or the rear surface lens segment drive (208a, 208b, 208c, 208d, 210a, 210b, 210c, 210d) such that the front surface lens segment and/or the rear surface lens segment (104) are/is not tilted relative to a viewing direction of the eye during the tracking.

6. Spectacles (200) according to Claim 5,
**characterized in that**
the carrier lens front surface (106), on which the front surface lens segment is guided displaceably, is embodied in a spherical fashion, and/or **in that** the carrier lens rear surface (108), on which the rear surface lens segment (104) is guided displaceably, is embodied in a spherical fashion, and **in that** the spherical carrier lens front surface (106) has a radius (r) that is in a range of between 26 mm and 36 mm, and/or **in that** the spherical carrier lens rear surface (108) has a radius (r) that is in a range of between 25 mm and 35 mm.

7. Spectacles (200) according to Claim 5,
**characterized in that**
- the carrier lens front surface (106), on which the front surface lens segment is guided displaceably, is embodied in a spherical fashion, and/or **in that** the carrier lens rear surface (108), on which the rear surface lens segment (104) is guided displaceably, is embodied in a spherical fashion, and **in that** the spherical carrier lens front surface (106) has a radius (r) that is in a range of between 26 mm and 36 mm, and/or **in that** the spherical carrier lens rear surface (108) has a radius (r) that is in a range of between 25 mm and 35 mm, wherein the drive control device is designed to control the front surface lens segment drive and/or the rear surface lens segment drive (208a, 208b, 208c, 208d, 210a, 210b, 210c, 210d) such that the front surface lens segment and/or the rear surface lens segment (104) are/is not tilted relative to a viewing direction of the eye during the tracking.

8. Spectacles (200) according to any of the preceding claims, **characterized in that** the front surface lens segment has a front surface lens segment rear surface, which bears shape-complementarily on the carrier lens front surface (106) during displacement, and/or **in that** the rear surface lens segment (104) has a rear surface lens segment front surface (110), which bears shape-complementarily on the carrier lens rear surface (108) during displacement.

9. Spectacles (200) according to any of the preceding claims, **characterized in that** the carrier lens front surface (106), on which the front surface lens segment is guided displaceably, carries an adhesion-reducing coating, and/or **in that** the carrier lens rear surface (108), on which the rear surface lens segment (104) is guided displaceably, carries an adhesion-reducing coating, and/or **in that** the front surface lens segment, which is guided displaceably on the carrier lens front surface (106), carries an adhesion-reducing coating, and/or **in that** the rear surface lens segment (104), which is guided displaceably on the carrier lens rear surface (108), carries an adhesion-reducing coating.

10. Spectacles (200) according to any of the preceding claims, **characterized in that** the front surface lens segment has a display device for displaying information, and/or **in that** the rear surface lens segment has a display device for displaying information.

11. Spectacles (200) according to any of the preceding claims, **characterized by**
- a distance detection device (304) for detecting the distance (308) of an object (310) viewed by the eye of the spectacles wearer (300) wearing the spectacles, wherein
- the drive control device is configured for controlling the front surface lens segment drive and/or the rear surface lens segment drive (208a, 208b, 208c, 208d, 210a, 210b, 210c, 210d) depending on the position of the eye detected by the eye position detection device (212a, 212b) and depending on the distance (308) of the viewed object (310) detected by the distance detection device (304).

12. Spectacles (200) according to any of the preceding claims, **characterized in that** the front surface lens segment has a variable refractive power, and/or **in that** the rear surface lens segment (104) has a variable refractive power.

13. Spectacles (200) according to any of the preceding claims, **characterized in that** the front surface lens segment has a front surface lens segment front surface having a variable surface refractive power, and/or **in that** the rear surface lens segment (104) has a rear surface lens segment rear surface (112) having a variable surface refractive power.

14. Spectacles (200) according to either of Claims 12 or 13, **characterized in that** a variation device is provided in order to vary
(a) the variable refractive power of the front surface lens segment and/or of the rear surface lens segment (104) and/or
(b) the variable surface refractive power of the front surface lens segment front surface of the front surface lens segment and/or the variable surface refractive power of the rear surface lens segment rear surface of the rear surface lens segment
depending on the position of the eye detected by the eye position detection device (212a, 212b).

15. Spectacles (200) according to Claim 14, **characterized by**
- a distance detection device (304) for detecting the distance (308) of an object (310) viewed by the eye of the spectacles wearer (300) wearing the spectacles, wherein
the variation device is designed to vary
(a) the variable refractive power of the front surface lens segment and/or of the rear surface lens segment (104) and/or
(b) the variable surface refractive power of the front surface lens segment front surface of the front surface lens segment and/or the variable surface refractive power of the rear surface lens segment rear surface of the rear surface lens segment
depending on the position of the eye detected by the eye position detection device (212a, 212b) and depending on the distance (308) of the viewed object (310) detected by the distance detection device (304).

16. Method for producing a spectacle lens (100) for spectacles (200), wherein
(i) the spectacle lens (100) comprises
- a carrier lens (102) having a carrier lens front surface (106) and a carrier lens rear surface (108), and
- a front surface lens segment arranged on the carrier lens front surface (106), and/or a rear surface lens segment (104) arranged on the carrier lens rear surface (108), wherein
- the front surface lens segment is guided displaceably on the carrier lens front surface (106), and/or wherein the rear surface lens segment (104) is guided displaceably on the carrier lens rear surface (108), wherein
the spectacles (200) furthermore comprise
(ii) a front surface lens segment drive in order to displace the front surface lens segment on the carrier lens front surface (106), and/or a rear surface lens segment drive (208a, 208b, 208c, 208d, 210a, 210b, 210c, 210d) in order to displace the rear surface lens segment (104) on the carrier lens rear surface (108),
(iii) an eye position detection device (212a, 212b) for detecting the position of an eye of a spectacles wearer (300) wearing the spectacles (200), and
(iv) a drive control device for controlling the front surface lens segment drive and/or the rear surface lens segment drive (208a, 208b, 208c, 208d, 210a, 210b, 210c, 210d) depending on the position of the eye detected by the eye position detection device (212a, 212b),
**characterized in that**
the drive control device is designed to control the front surface lens segment drive and/or the rear surface lens segment drive (208a, 208b, 208c, 208d, 210a, 210b, 210c, 210d) such that the front surface lens segment and/or the rear surface lens segment (104) are/is tracked to viewing movements of the eye, and the drive control device is designed to control the front surface lens segment drive and/or the rear surface lens segment drive (208a, 208b, 208c, 208d, 210a, 210b, 210c, 210d) such that the front surface lens segment and/or the rear surface lens segment (104) are/is not tilted relative to a viewing direction of the eye during the tracking.

17. Method for operating a spectacle lens (100) of spectacles (200) comprising
(i) the spectacle lens (100) comprising
- a carrier lens (102) having a carrier lens front surface (106) and a carrier lens rear surface (108), and
- a front surface lens segment arranged on the carrier lens front surface (106), and/or comprising a rear surface lens segment (104) arranged on the carrier lens rear surface (108), wherein
- the front surface lens segment is guided displaceably on the carrier lens front surface (106), and/or wherein the rear surface lens segment (104) is guided displaceably on the carrier lens rear surface (108),
(ii) a front surface lens segment drive in order to displace the front surface lens segment on the carrier lens front surface (106) and/or a rear surface lens segment drive (208a, 208b, 208c, 208d, 210a, 210b, 210c, 210d) in order to displace the rear surface lens segment (104) on the carrier lens rear surface (108),
(iii) an eye position detection device (212a, 212b) for detecting the position of an eye of a spectacles wearer (300) wearing the spectacles (200), and
(iv) a drive control device for controlling the front surface lens segment drive and/or the rear surface lens segment drive (208a, 208b, 208c, 208d, 210a, 210b, 210c, 210d) depending on the position of the eye detected by the eye position detection device (212a, 212b),
**characterized in that**
the drive control device is designed to control the front surface lens segment drive and/or the rear surface lens segment drive (208a, 208b, 208c, 208d, 210a, 210b, 210c, 210d) such that the front surface lens segment and/or the rear surface lens segment (104) are/is tracked to viewing movements of the eye, and
the front surface lens segment and/or the rear surface lens segment (104) are/is tracked on a spherical surface whose origin lies at the fulcrum of the eye.

## Revendications

1. Lunettes (200), comprenant
(i) un verre de lunette (100) ayant
- une lentille porteuse (102) qui possède une surface avant de lentille porteuse (106) et une surface arrière de lentille porteuse (108) et
- un segment de lentille de surface avant disposé sur la surface avant de lentille porteuse (106) et/ou comprenant un segment de lentille de surface arrière (104) disposé sur la surface arrière de lentille porteuse (108),
- le segment de lentille de surface avant étant guidé de manière déplaçable sur la surface avant de lentille porteuse (106) et/ou le segment de lentille de surface arrière (104) étant guidé de manière déplaçable sur la surface arrière de lentille porteuse (108),
(ii) un mécanisme d'entraînement de segment de lentille de surface avant destiné à déplacer le segment de lentille de surface avant sur la surface avant de lentille porteuse (106) et/ou un mécanisme d'entraînement de segment de lentille de surface arrière (208a, 208b, 208c, 208d, 210a, 210b, 210c, 210d) destiné à déplacer le segment de lentille de surface arrière (104) sur la surface arrière de lentille porteuse (108),
(iii) un dispositif de détection de position d'oeil (212a, 212b) destiné à détecter la position d'un oeil d'un porteur de lunettes (300) qui porte les lunettes (200) et
(iv) un dispositif de commande d'entraînement destiné à commander le mécanisme d'entraînement de segment de lentille de surface avant et/ou le mécanisme d'entraînement de segment de lentille de surface arrière (208a, 208b, 208c, 208d, 210a, 210b, 210c, 210d) en fonction de la position de l'oeil détectée par le dispositif de détection de position d'oeil (212a, 212b) **caractérisées en ce que**
le dispositif de commande d'entraînement est conçu pour commander le mécanisme d'entraînement de segment de lentille de surface avant et/ou le mécanisme d'entraînement de segment de lentille de surface arrière (208a, 208b, 208c, 208d, 210a, 210b, 210c, 210d) de telle sorte que le segment de lentille de surface avant et/ou le segment de lentille de surface arrière (104) est asservi aux mouvements du regard de l'oeil.

2. Lunettes (200) selon la revendication 1, **caractérisées en ce que** le dispositif de commande d'entraînement est conçu pour commander le mécanisme d'entraînement de segment de lentille de surface avant et/ou le mécanisme d'entraînement de segment de lentille de surface arrière (208a, 208b, 208c, 208d, 210a, 210b, 210c, 210d) de telle sorte que le segment de lentille de surface avant et/ou le segment de lentille de surface arrière (104) est asservi aux mouvements du regard de l'oeil du porteur de lunettes (300) de sorte qu'un point de vision par l'oeil du porteur de lunettes (300) à travers le verre de lunette (100) reste toujours identique.

3. Lunettes (200) selon la revendication 1 ou 2, **caractérisées en ce que** le segment de lentille de surface avant et/ou le segment de lentille de surface arrière (104) possède une distribution de l'effet qui correspond à une partie de vision proche, une partie de vision de loin et un canal de progression d'un verre à foyer progressif conventionnel.

4. Lunettes (200) selon la revendication 1, **caractérisées en ce que** le dispositif de commande d'entraînement est conçu pour commander le mécanisme d'entraînement de segment de lentille de surface avant et/ou le mécanisme d'entraînement de segment de lentille de surface arrière (208a, 208b, 208c, 208d, 210a, 210b, 210c, 210d) de telle sorte que le segment de lentille de surface avant et/ou le segment de lentille de surface arrière (104) est décalé de manière à ce que la partie de vision proche, la partie de vision de loin ou la portion adaptée du canal de progression soit présentée devant une pupille de l'oeil en fonction de la distance (308) détectée.

5. Lunettes (200) selon l'une des revendications 1 à 4,
**caractérisées en ce que** le dispositif de commande d'entraînement est conçu pour commander le mécanisme d'entraînement de segment de lentille de surface avant et/ou le mécanisme d'entraînement de segment de lentille de surface arrière (208a, 208b, 208c, 208d, 210a, 210b, 210c, 210d) de telle sorte que le segment de lentille de surface avant et/ou le segment de lentille de surface arrière (104), lors de l'asservissement, ne présentent pas un défaut d'alignement angulaire par rapport à une direction du regard de l'oeil.

6. Lunettes (200) selon la revendication 5,
**caractérisées en ce que** la surface avant de lentille porteuse (106), sur laquelle le segment de lentille de surface avant est guidé de manière déplaçable, est de configuration sphérique et/ou **en ce que** la surface arrière de lentille porteuse (108), sur laquelle le segment de lentille de surface arrière (104) est guidé de manière déplaçable, est de configuration sphérique et **en ce que** la surface avant de lentille porteuse (106) sphérique possède un rayon (r) qui est compris dans une plage entre 26 mm et 36 mm et/ou **en ce que** la surface arrière de lentille porteuse (108) sphérique possède un rayon (r) qui est compris dans une plage entre 25 mm et 35 mm.

7. Lunettes (200) selon la revendication 5, **caractérisées en ce que**
- la surface avant de lentille porteuse (106), sur laquelle le segment de lentille de surface avant est guidé de manière déplaçable, est de configuration sphérique et/ou **en ce que** la surface arrière de lentille porteuse (108), sur laquelle le segment de lentille de surface arrière (104) est guidé de manière déplaçable, est de configuration sphérique et **en ce que** la surface avant de lentille porteuse (106) sphérique possède un rayon (r) qui est compris dans une plage entre 26 mm et 36 mm et/ou **en ce que** la surface arrière de lentille porteuse (108) sphérique possède un rayon (r) qui est compris dans une plage entre 25 mm et 35 mm, le dispositif de commande d'entraînement étant conçu pour commander le mécanisme d'entraînement de segment de lentille de surface avant et/ou le mécanisme d'entraînement de segment de lentille de surface arrière (208a, 208b, 208c, 208d, 210a, 210b, 210c, 210d) de telle sorte que le segment de lentille de surface avant et/ou le segment de lentille de surface arrière (104), lors de l'asservissement, ne présentent pas un défaut d'alignement angulaire par rapport à une direction du regard de l'oeil.

8. Lunettes (200) selon l'une des revendications précédentes, **caractérisées en ce que** le segment de lentille de surface avant possède une surface arrière de segment de lentille de surface avant qui, lors du déplacement, repose par complémentarité de formes sur la surface avant de lentille porteuse (106) et/ou **en ce que** le segment de lentille de surface arrière (104) possède une surface avant de segment de lentille de surface arrière (110) qui, lors du déplacement, repose par complémentarité de formes sur la surface avant de lentille porteuse (108).

9. Lunettes (200) selon l'une des revendications précédentes, **caractérisées en ce que** la surface avant de lentille porteuse (106), sur laquelle le segment de lentille de surface avant est guidé de manière déplaçable, comporte un revêtement réduisant l'adhérence et/ou **en ce que** la surface arrière de lentille porteuse (108), sur laquelle le segment de lentille de surface arrière (104) est guidé de manière déplaçable, comporte un revêtement réduisant l'adhérence et/ou **en ce que** le segment de lentille de surface avant, qui est guidé de manière déplaçable sur la surface avant de lentille porteuse (106), comporte un revêtement réduisant l'adhérence et/ou **en ce que** le segment de lentille de surface arrière (104), qui est guidé de manière déplaçable sur la surface arrière de lentille porteuse (108), comporte un revêtement réduisant l'adhérence.

10. Lunettes (200) selon l'une des revendications précédentes, **caractérisées en ce que** le segment de lentille de surface avant possède un dispositif d'affichage destiné à afficher des informations et/ou **en ce que** le segment de lentille de surface arrière possède un dispositif d'affichage destiné à afficher des informations.

11. Lunettes (200) selon l'une des revendications précédentes, **caractérisées par**
- un dispositif de détection de distance (304) destiné à détecter la distance (308) d'un objet (310) observé par l'oeil du porteur de lunettes (300) qui porte les lunettes,
- le dispositif de commande d'entraînement étant conçu pour commander le mécanisme d'entraînement de segment de lentille de surface avant et/ou le mécanisme d'entraînement de segment de lentille de surface arrière (208a, 208b, 208c, 208d, 210a, 210b, 210c, 210d) en fonction de la position de l'oeil détectée par le dispositif de détection de position d'oeil (212a, 212b) et de la distance (308) de l'objet (310) observé détectée par le dispositif de détection de distance (304).

12. Lunettes (200) selon l'une des revendications précédentes, **caractérisées en ce que** le segment de lentille de surface avant présente une réfringence variable et/ou **en ce que** le segment de lentille de surface arrière (104) présente une réfringence variable.

13. Lunettes (200) selon l'une des revendications précédentes, **caractérisées en ce que** le segment de lentille de surface avant possède une surface avant de segment de lentille de surface avant ayant une réfringence de surface variable et/ou **en ce que** le segment de lentille de surface arrière (104) possède une surface arrière de segment de lentille de surface arrière (112) ayant une réfringence de surface variable.

14. Lunettes (200) selon l'une des revendications 12 ou 13, **caractérisées en ce qu'**un dispositif de modification est présent pour modifier
(a) la réfringence variable du segment de lentille de surface avant et/ou du segment de lentille de surface arrière (104) et/ou
(b) la réfringence de surface variable de la surface avant de segment de lentille de surface avant du segment de lentille de surface avant et/ou la réfringence de surface variable de la surface arrière de segment de lentille de surface arrière du segment de lentille de surface arrière
en fonction de la position de l'oeil détectée par le dispositif de détection de position d'oeil (212a, 212b).

15. Lunettes (200) selon la revendication 14, **caractérisées par**
- un dispositif de détection de distance (304) destiné à détecter la distance (308) d'un objet (310) observé par l'oeil du porteur de lunettes (300) qui porte les lunettes, le dispositif de modification étant conçu pour modifier
(a) la réfringence variable du segment de lentille de surface avant et/ou du segment de lentille de surface arrière (104) et/ou
(b) la réfringence de surface variable de la surface avant de segment de lentille de surface avant du segment de lentille de surface avant et/ou la réfringence de surface variable de la surface arrière de segment de lentille de surface arrière du segment de lentille de surface arrière
en fonction de la position de l'oeil détectée par le dispositif de détection de position d'oeil (212a, 212b) et de la distance (308) de l'objet (310) observé détectée par le dispositif de détection de distance (304).

16. Procédé de fabrication de lunettes (200), comprenant un verre de lunette (100),
(i) le verre de lunette (100) possédant
- une lentille porteuse (102) qui possède une surface avant de lentille porteuse (106) et une surface arrière de lentille porteuse (108) et
- un segment de lentille de surface avant disposé sur la surface avant de lentille porteuse (106) et/ou un segment de lentille de surface arrière (104) disposé sur la surface arrière de lentille porteuse (108),
- le segment de lentille de surface avant étant guidé de manière déplaçable sur la surface avant de lentille porteuse (106) et/ou le segment de lentille de surface arrière (104) étant guidé de manière déplaçable sur la surface arrière de lentille porteuse (108),
les lunettes (200) possédant en outre
(ii) un mécanisme d'entraînement de segment de lentille de surface avant destiné à déplacer le segment de lentille de surface avant sur la surface avant de lentille porteuse (106) et/ou un mécanisme d'entraînement de segment de lentille de surface arrière (208a, 208b, 208c, 208d, 210a, 210b, 210c, 210d) destiné à déplacer le segment de lentille de surface arrière (104) sur la surface arrière de lentille porteuse (108),
(iii) un dispositif de détection de position d'oeil (212a, 212b) destiné à détecter la position d'un oeil d'un porteur de lunettes (300) qui porte les lunettes (200) et
(iv) un dispositif de commande d'entraînement destiné à commander le mécanisme d'entraînement de segment de lentille de surface avant et/ou le mécanisme d'entraînement de segment de lentille de surface arrière (208a, 208b, 208c, 208d, 210a, 210b, 210c, 210d) en fonction de la position de l'oeil détectée par le dispositif de détection de position d'oeil (212a, 212b) **caractérisées en ce que**
le dispositif de commande d'entraînement est conçu pour commander le mécanisme d'entraînement de segment de lentille de surface avant et/ou le mécanisme d'entraînement de segment de lentille de surface arrière (208a, 208b, 208c, 208d, 210a, 210b, 210c, 210d) de telle sorte que le segment de lentille de surface avant et/ou le segment de lentille de surface arrière (104) est asservi aux mouvements du regard de l'oeil et le dispositif de commande d'entraînement est conçu pour commander le mécanisme d'entraînement de segment de lentille de surface avant et/ou le mécanisme d'entraînement de segment de lentille de surface arrière (208a, 208b, 208c, 208d, 210a, 210b, 210c, 210d) de telle sorte que le segment de lentille de surface avant et/ou le segment de lentille de surface arrière (104), lors de l'asservissement, ne présentent pas un défaut d'alignement angulaire par rapport à une direction du regard de l'oeil.

17. Procédé pour faire fonctionner un verre de lunette (100) de lunettes (200), comprenant
(i) le verre de lunette (100) ayant
- une lentille porteuse (102) qui possède une surface avant de lentille porteuse (106) et une surface arrière de lentille porteuse (108) et
- un segment de lentille de surface avant disposé sur la surface avant de lentille porteuse (106) et/ou comprenant un segment de lentille de surface arrière (104) disposé sur la surface arrière de lentille porteuse (108),
- le segment de lentille de surface avant étant guidé de manière déplaçable sur la surface avant de lentille porteuse (106) et/ou le segment de lentille de surface arrière (104) étant guidé de manière déplaçable sur la surface arrière de lentille porteuse (108),
(ii) un mécanisme d'entraînement de segment de lentille de surface avant destiné à déplacer le segment de lentille de surface avant sur la surface avant de lentille porteuse (106) et/ou un mécanisme d'entraînement de segment de lentille de surface arrière (208a, 208b, 208c, 208d, 210a, 210b, 210c, 210d) destiné à déplacer le segment de lentille de surface arrière (104) sur la surface arrière de lentille porteuse (108),
(iii) un dispositif de détection de position d'oeil (212a, 212b) destiné à détecter la position d'un oeil d'un porteur de lunettes (300) qui porte les lunettes (200) et
(iv) un dispositif de commande d'entraînement destiné à commander le mécanisme d'entraînement de segment de lentille de surface avant et/ou le mécanisme d'entraînement de segment de lentille de surface arrière (208a, 208b, 208c, 208d, 210a, 210b, 210c, 210d) en fonction de la position de l'oeil détectée par le dispositif de détection de position d'oeil (212a, 212b) **caractérisées en ce que**
le dispositif de commande d'entraînement est conçu pour commander le mécanisme d'entraînement de segment de lentille de surface avant et/ou le mécanisme d'entraînement de segment de lentille de surface arrière (208a, 208b, 208c, 208d, 210a, 210b, 210c, 210d) de telle sorte que le segment de lentille de surface avant et/ou le segment de lentille de surface arrière (104) est asservi aux mouvements du regard de l'oeil et le segment de lentille de surface avant et/ou le segment de lentille de surface arrière (104) est asservi est asservi sur une surface sphérique dont l'origine se trouve au centre de rotation de l'oeil.
